# EUROPEAN PATENT SPECIFICATION

(11) **EP 1 387 507 B1**
(45) Date of publication and mention of the grant of the patent: **19.04.2006**
(21) Application number: 02016863.9
(22) Date of filing: 30.07.2002
(51) Int. Cl.: H04B 10/17

(54) **Optical communication system using multiple Raman Amplifiers with a flat total gain**
Optisches Übertragungssystem mit mehreren Raman-Verstärkern mit flacher Gesamtverstärkung
Système de transmission optique à plusieurs amplificateurs Raman avec gain total plat

(43) Date of publication of application: 04.02.2004
(73) Proprietor: Sumitomo Electric Industries, Ltd., Osaka-shi, Osaka 541-0041 (JP)
(72) Inventor: Tsuzaki, Tetsufumi, Yokohama Works, Yokohama-shi, Kanagawa 244-8588 (JP); Nishimura, Masayuki, Yokohama Works, Yokohama-shi, Kanagawa 244-8588 (JP)
(74) Representative: HOFFMANN EITLE

(56) References cited:
- EP-A- 1 170 888
- WO-A-00/49721

## Description

### BACKGROUND OF THE INVENTION

### Field of the Invention

The present invention relates to an optical communication system utilizing signal light including respective wavelength components assigned to a plurality of channels; and, in particular, to an optical communication system in which Raman amplification compensates for the transmission loss occurring when the signal light propagates through an optical transmission line.

EP-A-1 170 888 discloses in combination the technical features of the pre-characterizing part of claim 1 below.

### Related Background Art

In an optical communication system utilizing signal light (wavelength division multiplexing light) including respective wavelength components assigned to a plurality of channels within a signal wavelength band, the signal light transmitted from a transmitter incurs transmission loss while propagating through the optical transmission line, so that the signal light decreases its power when reaching a receiver. If the signal light having reached the receiver has a power not higher than a predetermined value, reception errors may occur, whereby normal optical communications may not be carried out. Therefore, an optical amplifier is disposed between the transmitter and receiver, and the signal light is amplified by the optical amplifier, whereby the transmission loss occurring in the signal light propagating through the optical transmission line is compensated for.

Known as such an optical amplifier are optical fiber amplifiers doped with rare-earth elements (e.g., Er-doped optical fiber amplifier) and Ramanamplifiers utilizing Raman amplification phenomena in Raman amplification optical fibers. As compared with the optical fibers doped with rare-earth elements, the Raman amplifiers have such characteristics that they can adjust a gain-yielding wavelength band by appropriately setting the wavelength of Raman amplification pumping light, and the like.

In wavelength division multiplexing (WDM) optical communication systems for carrying out optical communications by utilizing signal light in which a plurality of wavelength components within a predetermined signal wavelength band are multiplexed, it is important that optical amplifiers in this signal wavelength band have a flat gain spectrum; otherwise, even when a signal of a signal channel within the signal wavelength band is correctly received by the receiver, signals of other signal channels having a lower gain may yield reception errors. Hence, studies have been conducted concerning techniques for flattening the gain spectrum of Raman amplifiers.

For example, in the gain flattening technique for Raman amplifiers disclosed in literature 1, i.e., Y. Emori, et al., "100 nm bandwidth flat gain Raman amplifiers pumped and gain-equalized by 12-wavelength-channel WDM high power laser diodes, "OFC' 99, PD19 (1999), respective output light components from N (N ≥ 2) pumping light sources are multiplexed, and thus multiplexed light is supplied as Raman amplification pumping light to a Raman amplification optical fiber. Also, the output center wavelength and output power of each of the N pumping light sources are appropriately set, so as to flatten the gain spectrum of Raman amplifiers. In literature 1, the number of pumping light sources, N, is 12.

In the gain flattening technique for a Raman amplifier disclosed in literature 2, i.e., F. Koch, et a 1., "Broadband gain flattened Raman amplifier to extend operation in the third telecommunication window, "OFC'2000, ThD, FF3 (2000), the gain spectrum of Raman amplifier is flattened by a gain equalizer having a loss spectrum with a shape substantially identical to that of the gain spectrum in the Raman amplification optical fiber.

In WO 00/49721, optical transmission systems including signal varying devices and methods are disclosed. The optical systems include a plurality of optical processing nodes and an optical transmission fiber extending between the nodes. Signal varying devices including a Raman gain section of transmission fiber are in optical communication with the processing nodes. Each signal varying device is supplied with pump energy by a pump energy source.

### SUMMARY OF THE INVENTION

The present invention is defined in claim 1 below. The dependent claim relates to optional and preferred features.

The inventors studied conventional optical communication systems and, as a result, have found problems as follows. Namely, there is a case where M (M ≥ 2) Raman amplifiers are necessary between a transmitter and a receiver in an optical communication system for carrying out long-distance optical communications. If the above-mentioned gain flattening technique in conventional Raman amplifiers (literature 1) is employed in this case, the total number of pumping light sources necessary in the whole optical communication system will be M x N, thereby raising the manufacturing cost.

In Raman amplifiers employing the gain flattening technique disclosed in literature 2, the pumping efficiency is low due to its structure in which, while the signal light is Raman-amplified by Raman amplification optical fibers, thus amplified signal light is attenuated by gain equalizers and the like.

For overcoming the problems mentioned above, it is an object of the present invention to provide an optical communication system having a flat Raman gain spectrum and excellent pumping efficiency in a signal wavelength band, and comprising a structure which is realizable/operable at a low cost.

The optical communication system according to the present invention is an optical communication system which transmits signal light (WDM light) including respective wavelength components assigned to a plurality of signal channels within a signal wavelength band from a first point to a second point. This optical communication system comprises an optical transmission line including a plurality of Raman amplification optical fibers, and respective pumping light suppliers provided so as to correspond to the Raman amplification optical fibers.

The optical transmission line transmits signal light from the first point to the second point, whereas each of a plurality of Raman amplification optical fibers constituting at least a part of the optical transmission line Raman-amplifies the signal light when the Raman amplification pumping light is supplied thereto. Each of the pumping light suppliers supplies Raman amplification pumping light to its corresponding Raman amplification optical fiber.

In the optical communication system according to the present invention, in particular, two Raman amplification optical fibers selected from the plurality of Raman amplification optical fibers included in the optical transmission line differ from each other in one of the wavelength at which the gain of Raman amplification becomes the highest and the number of signal.channels at which the gain of Raman amplification is maximum. Also, in the optical communication system, a value obtained by integrating the absolute value of difference between respective gain spectra of Raman amplification in the selected two Raman amplification optical fibers with respect to wavelength is at least 7.5 dB·nm. Preferably, in the optical communication system, the pumping light suppliers provided so as to correspond to the selected two Raman amplification optical fibers may differ from each other in the number of pumping light sources contained therein.

In the optical communication system according to the present invention, signal light including a plurality of wavelength components (assigned to respective signal channels) within a signal wavelength band sent out from a first point (transmitter or repeater) propagates through an optical transmission line including a plurality of Raman amplification optical fibers, so as to reach a second point (receiver or repeater). Here, the optical transmission line may include an optical fiber laid in a repeating section, and an optical fiber within a repeater, one of which is a Raman amplification optical fiber. Each of the plurality of Raman amplification optical fibers receives Raman amplification pumping light supplied from its corresponding pumping light supplier, transmits signal light, and Raman-amplifies the signal light. In the optical communication system according to the present invention, in particular, two selected Raman amplification optical fibers are different from each other in one of the wavelength at which the gain of Raman amplification becomes the highest and the number of signal channels at which the gain of Raman amplification is maximum. Preferably, they are further different from each other in the number of pumping light sources included in the respective pumping light suppliers provided so as to correspond thereto. In such a configuration, though the gain spectrum of Raman amplification in each Raman amplification optical fiber does not become flat within the signal wavelength band, at least the gain spectrum of Raman amplification viewed from the whole optical transmission line from the first point to the second point can be flattened within the signal wavelength band. The optical communication system according to the present invention can reduce the total number of pumping light sources necessary in the whole system as compared with the system disclosed in literature 1. Also, this can greatly lower the manufacturing and operating cost of the system. Further, since this optical communication system does not have a structure in which signal light is attenuated by a gain equalizer so as to flatten the gain, a better pumping efficiency is obtained as compared with the system disclosed in literature 2.

### BRIEF DESCRIPTION OF THE DRAWINGS

Fig. 1 is a diagram showing a typical schematic configuration of the optical communication system according to the present invention;
Fig. 2 is a diagram showing the structure of a repeater employed in the optical communication system of Fig. 1 as a first embodiment of the optical communication system according to the present invention;
Figs. 3A to 3C are respective examples of spectra of Raman amplification pumping light in parts of the optical communication system according to the first embodiment;
Figs. 4A to 4D are respective examples of spectra of Raman amplification pumping light in parts of the optical communication system according to the first embodiment;
Figs. 5A to 5C are other respective examples of spectra of Raman amplification pumping light in parts of the optical communication system according to the first embodiment;
Figs. 6A to 6D are other respective examples of spectra of Raman amplification pumping light in parts of the optical communication system according to the first embodiment;
Fig. 7 shows typical respective gain spectra of two Raman amplification optical fibers included in the optical communication system according to the present invention;
Fig. 8 is a diagram showing the structure of a repeater employed in the optical communication system of Fig. 1 as a second embodiment of the optical communication system according to the present invention;
Fig. 9 is a diagram showing the structure of a repeater employed in the optical communication system of Fig. 1 as a third embodiment of the optical communication system according to the present invention;
Fig. 10 shows a gain spectrum of Raman amplification in an optical transmission line including an optical fiber A as a comparative example;
Fig. 11 shows a gain spectrum of Raman amplification in an optical transmission line including optical fibers A and B as the comparative example;
Fig. 12 shows a gain spectrum of Raman amplification in an optical transmission line including the optical fiber A as a specific example of the optical communication system according to the present invention; and
Fig. 13 shows a gain spectrum of Raman amplification in an optical transmission line including the optical fibers A and B as the specific example of the optical communication system according to the present invention.

### DETAILED DESCRIPTION OF THE PREFERRED EMBODIMENTS

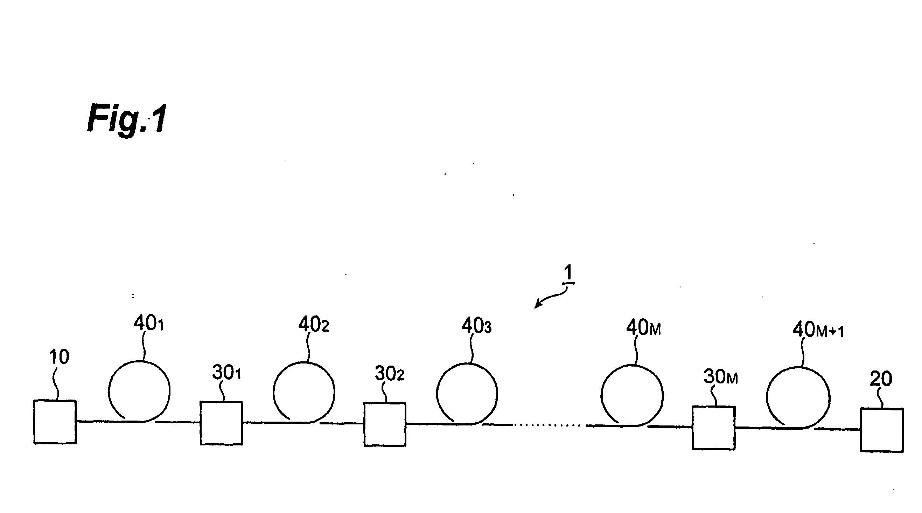

Embodiments of the optical communication system according to the present invention will now be explained in detail with reference to Figs. 1, 2, 3A to 6D, and 7 to 13. In the explanation of the drawings, constituents identical to each other will be referred to with numerals identical to each other without repeating their overlapping descriptions.

Fig. 1 is a diagram showing a typical schematic configuration of the optical communication system according to the present invention, illustrating the structure of each embodiment explained in the following except for the configuration of each repeater. As shown in Fig. 1, the optical communication system 1 according to the present invention comprises an optical transmission line for transmitting signal light (WDM light) including wavelength components assigned to a plurality of signal channels from a transmitter (or repeater) 10 to a receiver (or repeater) 20. Further, the optical communication system 1 comprises M (M ≥ 2) repeaters 30ₗ to 30_{M} successively arranged on the optical transmission line through which the signal light propagates. In this optical communication system 1, an optical fiber 40₁ is laid in the repeating section between the transmitter 10 and the repeater 30₁, an optical fiber 40ₘ₊₁ is laid in the repeating section between the repeaters 30ₘ and 30ₘ₊₁ (1 ≤ m < M) , and an optical fiber 40_{M+1} is laid in the repeating section between the repeater 30_{M} and the receiver 20.

The optical transmission line for transmitting signal light from the transmitter 10 to the receiver 20 includes not only the optical fibers 40₁ to 40_{M+1} laid in the respective repeating sections, but also respective optical fibers within the repeaters 30₁ to 30_{M}. In the optical communication system 1, the signal light sent out from the transmitter 10 is successively transmitted through the optical fibers 40₁ to 40_{M+1} by way of the repeaters 30₁ to 30_{M} therebetween, and then reaches the receiver 20.

The optical transmission line in the optical communication system 1 includes a plurality of Raman amplification optical fibers for Raman-amplifying the signal light when Raman amplification pumping light is supplied thereto. For example, the signal wavelength band in which wavelength components included in the signal light exist is a 1.55-µm band, whereas the wavelength band of Raman amplification pumping light is a 1.45-µm band. The Raman amplification optical fiber may be any or both of the optical fiber 40₁ to 40_{M+1} laid in each repeating section and the optical fiber within each of the repeaters 30₁ to 30ₘ.

### First Embodiment

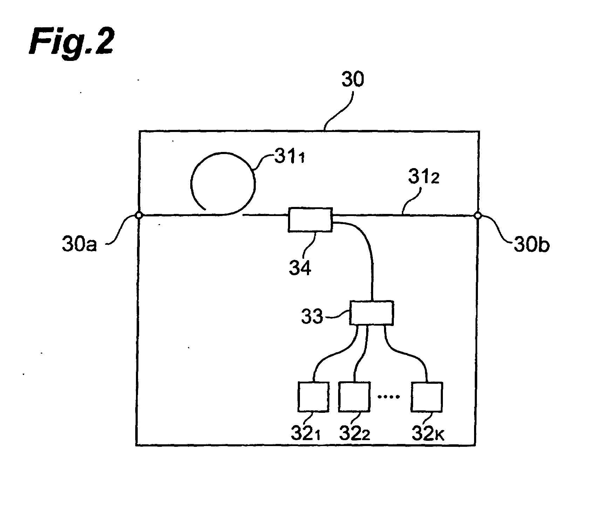

Fig. 2 is a diagram showing the configuration of repeater 30 as a first embodiment of the optical communication system according to the present invention. The optical communication system according to the first embodiment has a configuration similar to that shown in Fig. 1, whereby the repeater 30 of Fig. 2 is employed as the repeaters 30₁ to 30_{M} in the optical communication system 1 shown in Fig. 1. The repeater 30 includes optical fibers 31₁, 31₂, K (K ≥ 1) pumping light sources 32₁ to 32_{K}, an optical multiplexer 33, and an optical coupler 34. The optical fiber 31₁, optical coupler 34, and optical fiber 31₂ are successively arranged in this order on the signal light path between an input end 30a and an output end 30b. Here, the optical fiber 31₁ is a long optical fiber through which signal light and Raman amplification pumping light propagate between the input end 30a and the optical coupler 34, and functions as a Raman amplification optical fiber.

The pumping light sources 32₁ to 32_{K} are semiconductor laser light sources, for example, and are different from each other in the center wavelength of output light. The optical multiplexer 33 multiplexes respective light components outputted from the pumping light sources 32₁ to 32_{K}, and outputs thus multiplexed light as Ramanamplification pumping light to the optical coupler 34. The optical coupler 34 guides the Raman amplification pumping light (multiplexed light) outputted from the optical multiplexer 33 to the optical fiber 31₁, and outputs to the optical fiber 31₂ the signal light inputted from the optical fiber 31₁.

Namely, in the repeater 30, the optical fiber 31₁ functions as a Raman amplification optical fiber which Raman-amplifies signal light when Raman amplification pumping light is supplied thereto. Also, the pumping light sources 32₁ to 32_{K}, optical multiplexer 33, and optical coupler 34 constitute a pumping light supplier for supplying the Raman amplification pumping light to the optical fiber 31₁ acting as a Raman amplification optical fiber. The signal light fed to the input end 30a is Raman-amplified while propagating through the optical fiber 31₁, and is outputted from the output end 30b by way of the optical coupler 34 and optical fiber 31₂.

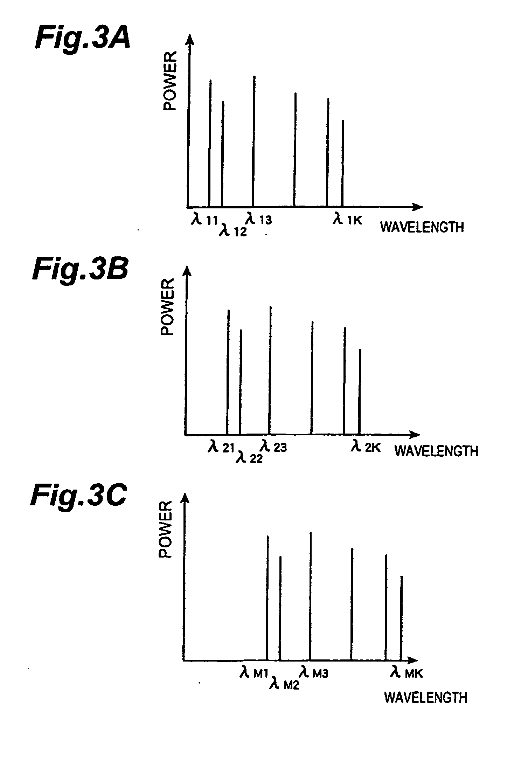

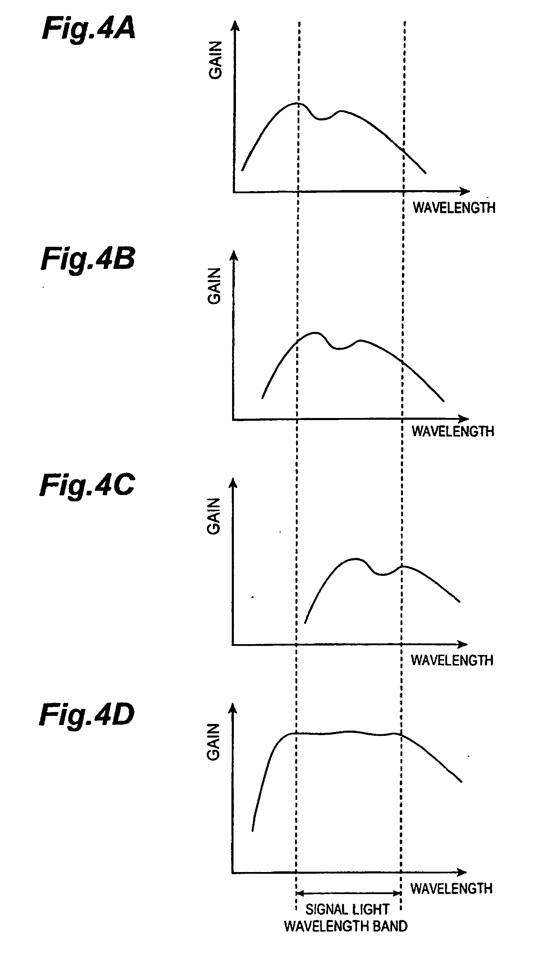

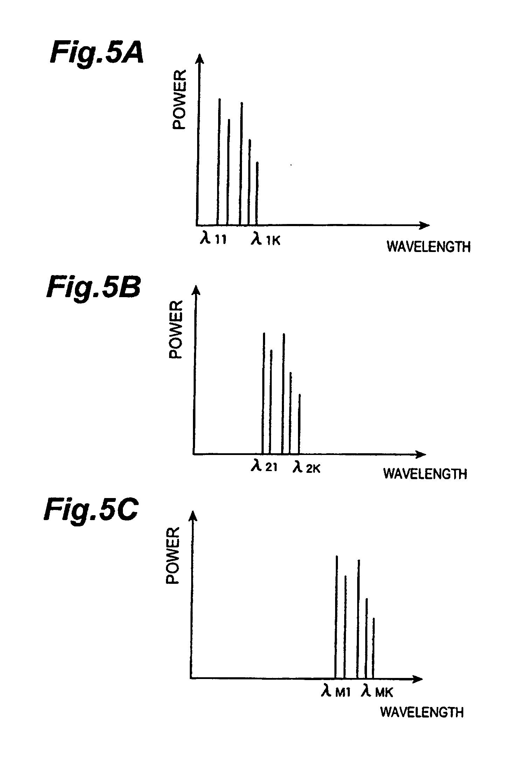

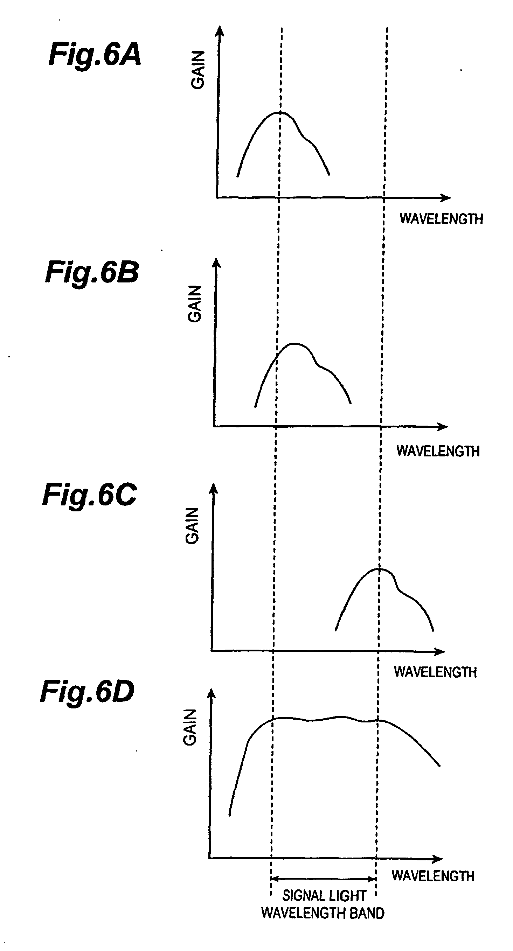

Figs. 3A to 3C are respective examples of spectra of Raman amplification pumping light in parts of the optical communication system according to the first embodiment. Figs. 4A to 4D are respective examples of spectra of Raman amplification pumping light in parts of the optical communication system according to the first embodiment. Figs. 5A to 5C are other respective examples of spectra of Raman amplification pumping light in parts of the optical communication system according to the first embodiment. Figs. 6A to 6D are respective examples of spectra of Raman amplification pumping light in parts of the optical communication system according to the first embodiment. In each spectrum, the center wavelength of output light from the k-th pumping light source 32ₖ in the repeater 30ₘ in the m-th stage is indicated as λₘₖ (1 ≤ m ≤ M, 1 ≤ k ≤ K).

Figs. 3A and 5A are spectra of Raman amplification pumping light (i.e., power of light having a wavelength of λ₁ₗ to λ₁ₖ) in the repeater 30₁ of the first stage. Figs. 3B and 5B are spectra of Raman amplification pumping light (i.e., power of light having a wavelength of λ₂ₗ to λ₂ₖ) in the repeater 30₂ of the second stage. Figs. 3C and 5C are spectra of Raman amplification pumping light (i.e., power of light having a wavelength of λ_{Ml} to λ_{Mk}) in the repeater 30_{M} of the M-th stage.

Figs. 4A and 6A are gain spectra of Raman amplification in the optical fiber 31₁ in the repeater 30₁ of the first stage. Figs. 4B and 6B are gain spectra of Raman amplification in the optical fiber 31₁ in the repeater 30₂ of the second stage. Figs. 4C and 6C are gain spectra of Raman amplification in the optical fiber 31₁ in the repeater 30_{M} of the M-th stage. Figs. 4D and 6D are gain spectra of Raman amplification in the whole optical transmission line from the transmitter 10 to the receiver 20.

For example, as a relationship between individual wavelengths λₘₖ as shown in Figs. 3A to 3C and 5A to 5C, it is assumed that λ_{m+1, k} -λₘₖ is substantially constant regardless of the value of parameter k (1 ≤ m < M, 1 ≤ k ≤ K). Also, it is assumed that the power of light having each wavelength λₘₖ is substantially constant regardless of the parameter m (1 ≤ m ≤ M, 1 ≤ k ≤ K) . Here, as shown in Figs. 4A to 4C and 6A to 6C, it is not always necessary for the gain spectrum of Raman amplification in the optical fiber 31₁ in the repeater 30ₘ of the m-th stage to be flat and identical within the signal wavelength band, and the gain spectrum may shift in the wavelength axis direction (1 ≤ m ≤ M).

As shown in Figs. 3A to 3C, the wavelength band λₘ₁ to λₘₖ of Raman amplification pumping light in the repeater 30ₘ of the m-th stage and the wavelength band λ_{m+1,1} to λₘ₊₁, ₖ of Raman amplification pumping light in the repeater 30ₘ₊₁ of the (m+1)-th stage may overlap each other (1 ≤ m < M). In this case, as shown in Figs. 4A to 4C, the repeater of each stage can attain a gain in substantially all the wavelength ranges within the signal wavelength band. Also, as shown in Figs. 5A to 5C, the wavelength band λ_{m+1, 1} to λ_{m+1, k} of Raman amplification pumping light in the repeater 30ₘ₊₁ of the (m+1) -th stage may shift to the longer wavelength side than the wavelength band λₘ₁ to λₘₖ of Raman amplification pumping light in the repeater 30ₘ of the m-th stage (l ≤ m < M). In this case, the repeater of each stage can obtain a gain in a part of the wavelength range within the signal wavelength band as shown in Figs. 6A to 6C.

As shown in Figs. 4D and 6D, the gain spectrum of Raman amplification in the whole optical transmission line from the transmitter 10 to the receiver 20 is the sum of respective gain spectra of Raman amplification in the repeaters 30ₘ of the individual stages (1 ≤ m ≤ M). Here, the gain spectrum of the whole optical transmission line becomes flat within the signal wavelength band. This flatness of spectrum is achieved, for example, when the deviation in gain of the whole optical transmission line is suppressed to ±1.5 dB or less in a signal wavelength band with a width of 15 nm or greater including a wavelength of 1.55 µm.

For flattening the gain spectrum of the whole optical transmission line within the signal wavelength band, it is necessary that the output center wavelength λₘₖ and output power of each pumping light source 32ₖ in the repeater 30ₘ of each stage be set appropriately (1 ≤ m ≤ M, 1 ≤ k ≤ K). Preferably, in this case, the output center wavelength λₘₖ and output power of each pumping light source 32ₖ in the repeater 30ₘ of each stage are appropriately set so as to yield a signal light power at which the occurrence of nonlinear optical phenomena can be suppressed at all the points on the optical transmission line.

When compared with the conventional optical communication system in which the Raman amplifier disclosed in the above-mentioned literature 1 or 2 is included in each repeater, the optical communication system according to the first embodiment including the repeater 30 shown in Fig. 2 exhibits the following effects. Namely, the optical communication system in which the Raman amplifier disclosed in literature 1 is included in each repeater flattens the gain spectrumof Raman amplification in the signal wavelength band by utilizing M x N pumping light sources in total arranged N by N in M stages of repeaters. In the optical communication system according to the first embodiment, by contrast, while the gain spectrum of the whole optical transmission line becomes flat within the signal wavelength band, it is not always necessary for the repeater of M-th stage to have a flat gain, and the respective gains of repeaters are not identical to each other. Therefore, the number K of pumping light sources necessary for each of the repeaters of M stages can be made less than the above-mentioned N in the optical communication system according to the first embodiment, whereby the total number M x N of the pumping light sources required in the whole system can be made smaller than that in the conventional optical communication system in which the Raman amplifier disclosed in literature 1 is included in each repeater. Hence, the manufacturing and operating cost of the optical communication system according to the first embodiment is lowered greatly. Also, since it is not necessary for the optical communication system according to the first embodiment to attenuate the signal light by using a gain equalizer so as to flatten the gain, the pumping efficiency thereof is better than that of the conventional optical communication system shown in literature 2 in which a Raman amplifier is included in each repeater.

Though the first embodiment relates to a case where the wavelength at which the gain of Raman amplification becomes the highest varies among repeaters 30ₘ of the m-th stages, the number of channels at which the gain of Raman amplification is maximum may vary among repeaters 30ₘ of the m-th stages, or the number of pumping light sources may vary among repeaters 30ₘ of the m-th stages. In each case, the gain spectrum of Raman amplification in the whole optical transmission line from the transmitter 10 to the receiver 20 can become flat even when the gain spectrum of Raman amplification in each Raman amplification optical fiber is not flat within the signal wavelength band. The optical communication system according to the first embodiment can make the total number of pumping light sources required in the whole system smaller than that in the conventional optical communication system in which the Raman amplifier disclosed in literature 1 is included in each repeater. Also, since it is not necessary for the optical communication system according to the first embodiment to attenuate the signal light by using a gain equalizer so as to flatten the gain, this system yields a pumping efficiency better than that of the conventional optical communication system in which the Raman amplifier disclosed in literature 2 is included in each repeater.

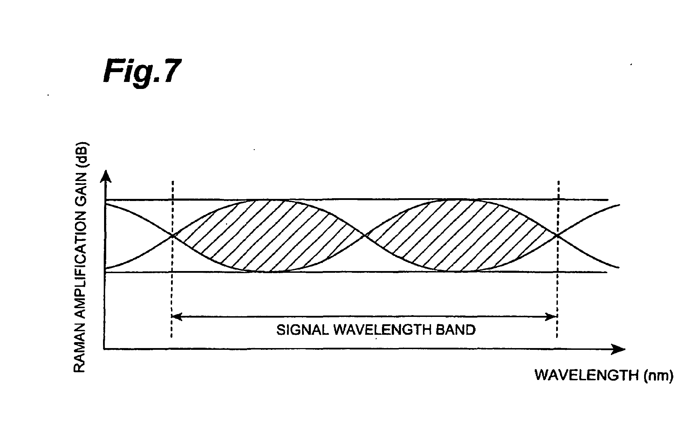

Preferably, in the optical communication system according to the first embodiment, the value obtained by integrating the absolute value of difference between respective gain spectra of Raman amplification of two Raman amplification optical fibers selected from the Raman amplification optical fibers included in the optical transmission line with respect to wavelength is at least 7.5 dB·nm, more preferably at least 15. 0 dB·nm. Fig. 7 shows respective typical gain spectra of two Raman amplification optical fibers included in the optical communication system according to the first embodiment. In Fig. 7, the area of hatched regions represents the value obtained by integrating the absolute value of difference between respective gain spectra of Raman amplification of the selected two Raman amplification optical fibers with respect to wavelength. This value is preferably at least 7.5 dB·nm (more preferably at least 15.0 dB·nm) in order to reduce the total number of pumping light sources required in the whole system as compared with the conventional optical communication system in which the Raman amplifier disclosed in literature 1 is included in each repeater.

### Second Embodiment

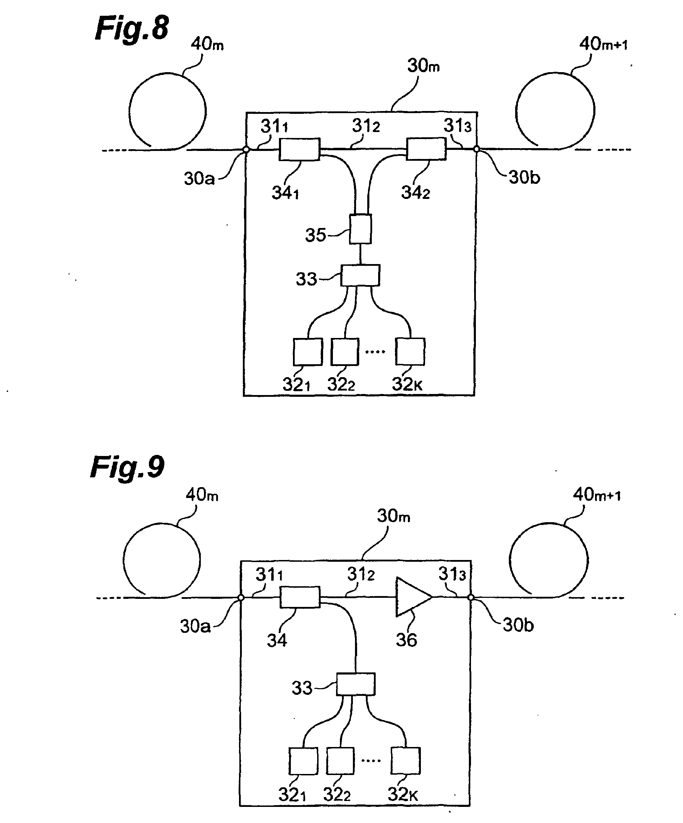

A second embodiment of the optical communication system according to the present invention will now be explained. Fig. 8 is a diagram showing the structure of a repeater as a second embodiment of the optical communication system according to the present invention. The configuration of the optical communication system according to the third embodiment is similar to that shown in Fig. 1, whereby the repeater 30ₘ of Fig. 8 is employed as the repeaters 30₁ to 30_{M} in the optical communication system 1 shown in Fig. 1. Also, in the optical communication system according to the second embodiment, optical fibers 40ₗ to 40_{M+1} laid in respective repeating sections function as Raman amplification optical fibers.

The repeater 30ₘ shown in Fig. 8 includes optical fibers 31₁ to 31₃, K (K ≥ 1) pumping light sources 32₁ to 32ₖ, an optical multiplexer 33, optical couplers 34₁, 34₂, and an optical branching device 35. The optical fiber 31₁, optical coupler 34₁, optical fiber 31₂, optical coupler 34₂, and optical fiber 31₃ are successively arranged in this order on the signal light path between an input end 30a and an output end 30b. The optical fiber 31₁ is a short optical fiber for transmitting signal light and Raman amplification pumping light between the input end 30a and the optical coupler 34₁. Similarly, the optical fiber 31₃ is a short optical fiber for transmitting signal light and Raman amplification pumping light between the output end 30b and the optical coupler 34₂.

The pumping light sources 32₁ to 32_{K} are semiconductor laser light sources, for example, and are different from each other in the center wavelength of output light. The optical multiplexer 33 multiplexes respective light components outputted from the pumping light sources 32₁ to 32_{K}, and outputs thus multiplexed light as Raman amplification pumping light to the optical branching device 35. The optical branching device splits the Raman amplification pumping light (multiplexed light) outputted from the optical multiplexer 33 into two light components, and outputs one of them to the optical coupler 34₁, and the other to the optical coupler 34₂. The optical coupler 34₁ guides one Raman amplification pumping light component outputted from the optical branching device 35 to the optical fiber 40ₘ by way of the optical fiber 31₁ and input end 30a, and outputs to the optical fiber 31₂. the signal light fed from the optical fiber 31₁. On the other hand, the optical coupler 34₂ guides the other Raman amplification pumping light component outputted from the optical branching device 35 to the optical fiber 40ₘ₊₁ by way of the optical fiber 31₃ and output end 30b, and outputs to the optical fiber 31₃ the signal light fed from the optical fiber 31₂.

Namely, in the optical communication system according to the second embodiment provided with thus configured repeaters 30₁ to 30_{M}, the optical fibers 40₁ to 40_{M+1} laid in respective repeating sections function as Raman amplification optical fibers which Raman-amplify signal light when Raman amplification pumping light is supplied thereto. The pumping light sources 32₁ to 32_{K}, optical multiplexer 33, optical couplers 34₁, 34₂, and optical branching device 35 within the repeater 30ₘ constitute a pumping light supplier for supplying the Raman amplification pumping light to each of optical fibers 40ₘ and 40ₘ₊₁ which are Raman amplification optical fibers (1 ≤ m ≤ M).

In the optical communication system according to the second embodiment, Raman amplification pumping light is supplied to the optical fiber 40₁ laidbetween the transmitter 10 and the repeater 30₁ of the first stage from the repeater 30₁. To the optical fiber 40_{M+1} laid between the repeater 30_{M} of the M-th stage and the receiver 20, Raman amplification pumping light is supplied from the repeater 30_{M}. To the optical fiber 40ₘ laid between the repeaters 30ₘ₋₁ and 30ₘ, Raman amplification pumping light is supplied from both of the repeaters 30ₘ₋₁ and 30ₘ (1 < m < M+1). This optical communication system may also comprise a configuration in which Raman amplification pumping light is supplied to the optical fiber 40₁ from the transmitter 10 as well, and a configuration in which Raman amplification pumping light is supplied to the optical fiber 40_{M+1} from the receiver 20 as well.

The signal light sent out from the transmitter 10 successively propagates through the optical fibers 40₁ to 40_{M+1} by way of the repeaters 30₁ to 30_{M} therebetween, thereby reaching the receiver 20. Since the signal light is Raman-amplified although it incurs loss caused by the transmission loss inherent in the optical fiber 40ₘ while propagating through the optical fiber 40ₘ in each repeating section, its substantial loss is small (1 ≤ m ≤ M+1).

In the optical communication system according to the second embodiment, the spectra of Raman amplification pumping light and gain spectra in respective parts are substantially the same as those in the above-mentioned Figs. 3A to 3C, 4A to 4D, 5A to 5D, and 6A to 6D. In the second embodiment, it is not necessary for the gain spectrum of Raman amplification in the optical fiber 40ₘ laid in each repeating section to be flat and identical within the signal wavelength band as shown in Figs. 4A to 4C or Figs. 6A to 6C, and the gain spectrum may shift in the wavelength axis direction (1 ≤ m ≤ M+1) .

As shown in Fig. 4D or 6D, the gain spectrum of Raman amplification in the whole optical transmission line from the transmitter 10 to the receiver 20 is the sum of respective gain spectra of Raman amplification in the optical fibers 40ₘ (1 ≤ m ≤ M+1) laid in the respective repeating sections in the second embodiment as well. Here, the gain spectrum of the whole optical transmission line becomes flat within the signal wavelength band. This flatness of spectrum is achieved, for example, when the deviation in gain of the whole optical transmission line is suppressed to ±1.5 dB or less in a signal wavelength band with a width of 15 nm or greater including a wavelength of 1.55 µm.

For flattening the gain spectrum of the whole optical transmission line within the signal wavelength band, it is necessary that the output center wavelength λₘₖ and output power of each pumping light source 32ₖ in the repeater 30ₘ of each stage be set appropriately (1 ≤ m ≤ M, 1 ≤ k ≤ K). Preferably, in this case, the output center wavelength λₘₖ and output power of each pumping light source 32ₖ in the repeater 30ₘ of each stage are appropriately set so as to yield a signal light power at which the occurrence of nonlinear optical phenomena can be suppressed at all the points on the optical transmission line.

The optical communication system according to the second embodiment exhibits effects substantially the same as those of the optical communication system according to the first embodiment. Namely, while the gain spectrum of the whole optical transmission line is flat within the signal wavelength band in the optical communication system according to the second embodiment, it is not always necessary for the gain spectrum in the optical fiber laid in each repeating section to be flat within the signal wavelength band, and the respective gain spectra of optical fibers are not identical to each other. In the optical communication system according to the second embodiment, the number K of pumping light sources necessary for each of the repeaters of M stages can be made smaller than the conventional number of N, whereby the total number M x N of pumping light sources required in the whole system can be made smaller than that in the conventional optical communication system in which the Raman amplifier disclosed in literature 1 is included in each repeater. As a consequence, the optical communication system according to the second embodiment can lower the manufacturing and operating cost. Also, since the optical communication system according to the second embodiment does not have a configuration in which the signal light is attenuated by a gain equalizer so as to flatten the gain, it yields a pumping efficiency better than that in the conventional optical communication system in which the Raman amplifier disclosed in literature 2 is included in each repeater. Further, when compared with the optical communication system according to the first embodiment in which a Raman amplification optical fiber is included within each repeater, the optical communication system according to the second embodiment has a shorter transmission path length of signal light from the transmitter 10 to the receiver 20 and a smaller inherent transmission loss since the signal light is Raman-amplified in the optical fiber laid in each repeating section.

Though the second embodiment also relates to a case where the wavelength at which the gain of Raman amplification becomes the highest varies among optical fibers 40ₘ laid in the respective repeating sections, the number of channels at which the gain of Raman amplification is maximum may vary among the optical fibers 40ₘ, and the number of pumping light sources may vary among repeaters 30ₘ of the m-th stages. In each case, the gain spectrum of Raman amplification in the whole optical transmission line from the transmitter 10 to the receiver 20 can become flat even when the gain spectrum of Raman amplification in each Raman amplification optical fiber (corresponding to the optical fiber 40ₘ laid in each repeating section) is not flat within the signal wavelength band. The optical communication system according to the second embodiment can make the total number of pumping light sources required in the whole system smaller than that in the conventional optical communication system in which the Raman amplifier disclosed in literature 1 is included in each repeater. Also, since it is not necessary for the optical communication system according to the second embodiment to attenuate the signal light by using a gain equalizer so as to flatten the gain, this system yields a pumping efficiency better than that of the conventional optical communication system in which the Raman amplifier disclosed in literature 2 is included in each repeater.

Preferably, in the optical communication system according to the second embodiment, the value obtained by integrating the absolute value of difference between respective gain spectra of Raman amplification of two Raman amplification optical fibers selected from the Raman amplification optical fibers included in the optical transmission line with respect to wavelength is at least 7.5 dB·nm, more preferably at least 15.0 dB·nm. This value is preferably at least 7.5 dB·nm (more preferably at least 15.0 dB·nm) in order to make the total number of pumping light sources required in the whole system smaller than that in the conventional optical communication system in which the Raman amplifier disclosed in literature 1 is included in each repeater.

### Third Embodiment

A third embodiment of the optical communication system according to the present invention will now be explained. Fig. 9 is a diagram showing the structure of a repeater as a third embodiment of the optical communication system according to the present invention. The configuration of the optical communication system according to the third embodiment is similar to that shown in Fig. 1, whereby the repeater 30ₘ of Fig. 9 is employed as the repeaters 30₁ to 30_{M} in the optical communication system 1 shown in Fig. 1. Also, in the optical communication system according to the third embodiment, optical fibers 40₁ to 40_{M} laid in respective repeating sections function as Raman amplification optical fibers.

The repeater 30ₘ shown in Fig. 9 includes optical fibers 31₁ to 31₃, K (K ≥ 1) pumping light sources 32₁ to 32_{K}, an optical multiplexer 33, an optical coupler 34, and an Er-doped optical fiber amplifier 36. The optical fiber 31₁, optical coupler 34, optical fiber 31₂, Er-doped optical fiber amplifier 36, and optical fiber 31₃ are successively arranged in this order on the signal light path between an input end 30a and an output end 30b. The optical fiber 31₁ is a short optical fiber for transmitting signal light and Raman amplification pumping light between the input end 30a and the optical coupler 34.

The pumping light sources 32₁ to 32ₖ are semiconductor laser light sources, for example, and are different from each other in the center wavelength of output light. The optical multiplexer 33 multiplexes respective light components outputted from the pumping light sources 32₁ to 32ₖ, and outputs thusmultiplexed light as Raman amplification pumping light to the optical coupler 34. The optical coupler 34 guides the Raman amplification pumping light outputted from the optical multiplexer 33 to the optical fiber 40ₘ by way of the optical fiber 31₁ and input end 30a, and outputs to the optical fiber 31₂ the signal light fed from the optical fiber 31₁. The Er-doped optical fiber amplifier 36, on the other hand, is an optical device employing, as an optical amplification medium, an optical fiber whose optical waveguide region is doped with Er element, and amplifying signal light (in the wavelength band of 1.55 µm or 1.58 µm) when pumping light (having a wavelength of 0.98 µm or 1.48 µm) is supplied to the Er-doped optical fiber. The Er-doped optical fiber amplifier 36 optically amplifies the signal light fed from the optical fiber 31₂, and outputs thus amplified signal light to the optical fiber 31₃.

Namely, in the optical communication system according to the third embodiment provided with thus configured repeaters 30₁ to 30_{M}, the optical fibers 40₁ to 40_{M} laid in respective repeating sections function as Raman amplification optical fibers which Raman-amplify signal light when Raman amplification pumping light is supplied thereto. The pumping light sources 32₁ to 32ₖ, optical multiplexer 33, and optical coupler 34 within the repeater 30ₘ constitute a pumping light supplier for supplying Raman amplification pumping light to the optical fiber 40ₘ acting as a Raman amplification optical fiber (1 ≤ m ≤ M).

In the optical communication system according to the third embodiment, Raman amplification pumping light is supplied to the optical fiber 40₁ laidbetween the transmitter 10 and the repeater 30₁ of the first stage from the repeater 30₁. To the optical fiber 40ₘ laid between the repeaters 30ₘ₋₁ and 30ₘ, Raman amplification pumping light is supplied from the repeater 30ₘ (1 < m ≤ M) . The optical communication system according to the third embodiment may comprise a structure in which Raman amplification pumping light is supplied to the optical fiber 40_{M+1} laid between the repeater 30_{M} of the M-th stage and the receiver 20 from the receiver 20.

The signal light sent out from the transmitter 10 successively propagates through the optical fibers 40₁ to 40_{M+1} by way of the repeaters 30₁ to 30_{M} therebetween, thereby reaching the receiver 20. Since the signal light is Raman-amplified although it incurs loss caused by the transmission loss inherent in the optical fiber 40ₘ while propagating through the optical fiber 40ₘ in each repeating section, its substantial loss is small, whereby a desirable gain is obtained (1 ≤ m ≤ M).

In the optical communication system according to the third embodiment, the spectra of Raman amplification pumping light and gain spectra are substantially the same as those in the above-mentioned Figs. 3A to 3C, 4A to 4D, 5A to 5D, and 6A to 6D. In the optical communication system according to the third embodiment, it is not necessary for the gain spectrum of Raman amplification in the optical fiber 40ₘ laid in each repeating section to be flat and identical within the signal wavelength band as shown in Figs. 4A to 4C or Figs. 6A to 6C, and the gain spectrum may shift in the wavelength axis direction (1 ≤ m ≤ M).

As shown in Fig. 4D or 6D, the gain spectrum of Raman amplification in the whole optical transmission line from the transmitter 10 to the receiver 20 is the sum of gain spectra of Raman amplification in the optical fibers 40ₘ (1 ≤ m ≤ M) laid in the respective repeating sections in the third embodiment as well. Here, the gain spectrum of the whole optical transmission line becomes flat within the signal wavelength band. This flatness of spectrum is achieved, for example, when the deviation in gain of the whole optical transmission line is suppressed to ±1.5 dB or less in a signal wavelength band with a width of 15 nm or greater including a wavelength of 1.55 µm.

For flattening the gain spectrum of the whole optical transmission line within the signal wavelength band, it is necessary that the output center wavelength λₘₖ and output power of each pumping light source 32ₖ in the repeater 30ₘ of each stage be set appropriately (1 ≤ m ≤ M, 1 ≤ k ≤ K) . Preferably, in this case, the output center wavelength λₘₖ and output power of each pumping light source 32ₖ in the repeater 30ₘ of each stage are appropriately set so as to yield a signal light power at which the occurrence of nonlinear optical phenomena can be suppressed at all the points on the optical transmission line.

The optical communication system according to the third embodiment exhibits not only effects which are substantially the same as those of the optical communication system according to the second embodiment, but also the following effects. Namely, since the optical communication system according to the third embodiment comprises an Er-doped optical fiber amplifier in addition to the Raman amplifier within each repeater, signal light in the 1.45-µm wavelength band can be amplified by the Raman amplifier while signal light in the 1.55-µm wavelength band and 1.58-µm wavelength band is Raman-amplified by the Raman amplifier, for example, whereby optical communications in a wider signal wavelength band are possible.

### Specific Example

A specific example of the optical communication system according to the present invention will now be explained together with a comparative example. The specific example of optical communication system was configured such that an optical transmission line in which two single-mode optical fibers each having a length of 50 km were fusion-spliced to each other was laid, whereas each of the optical fibers A and B was pumped in a bidirectional fashion.

In the comparative example, on the other hand, the Raman amplification pumping light supplied to each of the optical fibers A and B was multiplexed light including respective laser light beams outputted from seven semiconductor laser light sources. In the comparative example, the first laser light source outputted laser light having a wavelength of 1420 nm (with a power of 21.00 dBm), the second laser light source outputted laser light having a wavelength of 1425 nm (with a power of 19.38 dBm) , the third laser light source outputted laser light having a wavelength of 1430 nm (with a power of 19.40 dBm) , the fourth laser light source outputted laser light having a wavelength of 1435 nm (with a power of 18.55 dBm), the fifth laser light source outputted laser light having a wavelength of 1440 nm (with a power of 13.99 dBm), the sixth laser light source outputted laser light having a wavelength of 1450 nm (with a power of 20.21 dBm) , and the seventh laser light source outputted laser light having a wavelength of 1460 nm (with a power of 23.34 dBm) . In this comparative example, 14 semiconductor laser light sources were utilized in the whole system.

In the specific example of the optical communication system according to the present invention, the Raman amplification pumping light supplied to the optical fiber A was multiplexed light including respective laser light beams outputted from four semiconductor laser light sources. In the four semiconductor laser light sources, the first semiconductor laser light source outputted laser light having a wavelength of 1420 nm (with a power of 22.7598 dBm), the second semiconductor laser light source outputted laser light having a wavelength of 1430 nm (with a power of 22.8138 dBm) , the third semiconductor laser light source outputted laser light having a wavelength of 1440 nm (with a power of 18.7548 dBm), and the fourth semiconductor laser light source outputted laser light having a wavelength of 1460 nm (with a power of 24.5866 dBm). On the other hand, the Raman amplification pumping light supplied to the optical fiber B was multiplexed light including respective laser light beams outputted from five semiconductor laser light sources. In the five semiconductor laser light sources, the first semiconductor laser light source outputted laser light having a wavelength of 1420 nm (with a power of 16.9601 dBm) , the second semiconductor laser light source outputted laser light having a wavelength of 1425 nm (with a power of 21.6249 dBm) , the third semiconductor laser light source outputted laser light having a wavelength of 1435 nm (with a power of 21.5071 dBm), the fourth semiconductor laser light source outputted laser light having a wavelength of 1450 nm (with a power of 18.4999 dBm), and the fifth semiconductor laser light source outputted laser light having a wavelength of 1460 nm (with a power of 23.1174 dBm). In this specific example, nine semiconductor laser light sources were utilized in the whole system.

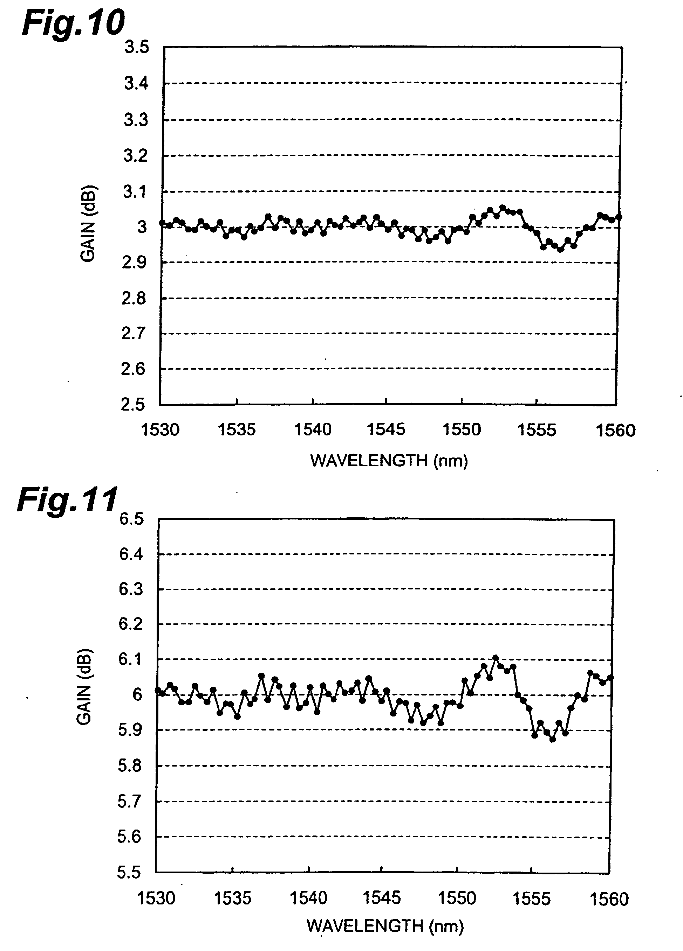

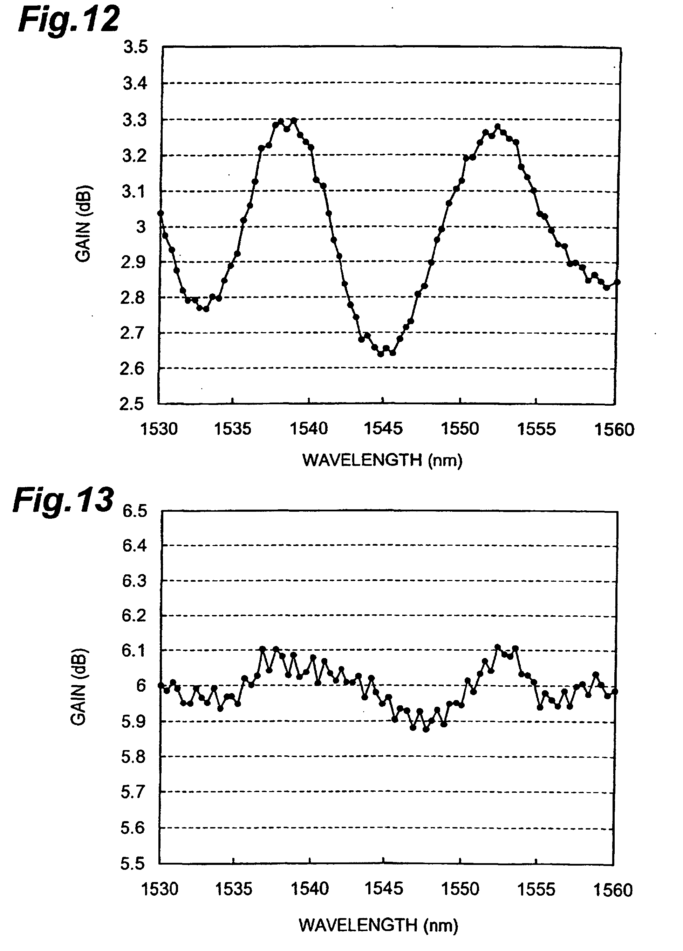

Fig. 10 shows the gain spectrum of Raman amplification of the optical transmission line including the optical fiber A as the comparative example, whereas Fig. 11 shows the gain spectrum of Raman amplification of the whole optical transmission line including the optical fibers A and B as the comparative example. Fig. 12 shows the gain spectrum of Raman amplification of the optical transmission line including the optical fiber A as the specific example of the optical communication system according to the present invention, whereas Fig. 13 shows the gain spectrum of Raman amplification of the optical transmission line including the optical fibers A and B as the specific example of the optical communication system according to the present invention. The gain spectrum of Raman amplification in the optical fiber A was flat in the comparative example in which Raman amplification pumping light was supplied from seven semiconductor laser light sources (Fig. 10), but not flat in the specific example in which Raman pumping light was supplied from four semiconductor laser light sources (Fig. 12). As for the gain spectrum of Raman amplification in the whole optical transmission line constituted by the optical fibers A and B, a flatness on the same order (with a deviation of about ±0.1 dB) was realized in both of the comparative example in which 14 semiconductor laser light sources were utilized in the whole system (Fig. 11) and the specific example in which 9 semiconductor laser light sources were utilized in the whole system (Fig. 12). Thus, the specific example makes the number of pumping light sources smaller than that in the comparative example while securing a flatness of gain spectrum on a par with that in the comparative example.

### Modified Examples

The optical communication system according to the present invention can be modified in various manners without being restricted to the embodiments mentioned above. For example, the repeater in the first embodiment (Fig. 2) may comprise an Er-doped optical fiber amplifier disposed between the optical coupler 34 and the output end 30b. In this case, optical communications over a wider signal wavelength band are possible as in the optical communication system of the third embodiment.

In each of the first to third embodiments, the spectrum of Raman amplification pumping light (constituted by the output center wavelength and output power of each pumping light source) is adjusted in order to regulate the gain spectrum in each Raman amplification optical fiber. However, the gain spectrum in each Raman amplification optical fiber may be regulated by adjusting the length or characteristics of each Raman amplification optical fiber.

According to the present invention, as explained in the foregoing, two Raman amplification optical fibers selected from a plurality of Raman amplification optical fibers included in an optical transmission line laid between a first point (transmitter or repeater) and a second point (receiver or repeater) are designed so as to differ from each other in at least one of the wavelength at which the gain of Raman amplificationbecomes the highest and the number of signal channels at which the gain of Raman amplification is maximum. Also, the number of pumping light sources included in the respective pumping light suppliers for supplying Raman pumping light to the selected two Raman amplification optical fibers may differ from each other.

Thus, the present inventionmakes it possible to flatten the gain spectrum of Raman amplification in the whole optical transmission line from the first point to the second point within the signal wavelength band even when the gain spectrum of Raman amplification in each Raman amplification optical fiber is not flat. Also, the present invention can make the total number of pumping light sources necessary for the whole system smaller than that in the conventional optical communication system in which the Raman amplifier disclosed in literature 1 is included in each repeater, thereby lowering the manufacturing and operating cost of the whole system. Further, since the present inventiondoes not have a structure in which the signal light is attenuated by a gain equalizer so as to flatten the gain, it can yield a pumping efficiency better than that of the conventional communication system in which the Raman amplifier disclosed in literature 2 is included in each repeater.

## Claims

1. An optical communication system (1) for transmitting signal light including a plurality of signal channels within a signal wavelength band from a first point (10) to a second point (20), said optical communication system comprising:
an optical transmission line, including a plurality of Raman amplification optical fibers (40₁ to 40_{M+1}), for transmitting said signal light from said first point to said second point, each of said Raman amplification optical fibers Raman-amplifying said signal light when Raman amplification pumping light is supplied thereto; and
respective pumping light suppliers (30₁ to 30_{M}) prepared so as to correspond to said plurality of Raman amplification optical fibers, each of said pumping light suppliers supplying Raman amplification pumping light to said Raman amplification optical fiber corresponding thereto;
**characterized in that**
two Raman amplification optical fibers selected from said plurality of Raman amplification optical fibers differ from each other in at least one of the wavelengths at which a gain of Raman amplification becomes the highest, and the number of channels at which said gain of Raman amplification is maximum, whereby a value obtained by integrating the absolute value of difference between respective gain spectra of Raman amplification of said selected two Raman amplification optical fibers with respect to wavelength is at least 7.5 dB · nm.

2. The optical communication system according to claim 1, wherein respective pumping light suppliers corresponding to said selected two Raman amplification optical fibers differ from each other in the number of pumping light sources included therein.

## Patentansprüche

1. Optisches Kommunikationssystem (1) zur Übertragung von Signallicht mit einer Vielzahl von Signalkanälen in einem Signalwellenlängenband von einem ersten Punkt (10) zu einem zweiten Punkt (20), wobei das optische Kommunikationssystem umfasst:
eine optische Übertragungsleitung mit einer Vielzahl von Raman-Verstärkungsglasfasern (40₁ bis 40_{M+1}) , zur Übertragung des Signallichts von dem ersten Punkt zu dem zweiten Punkt, wobei jede der Raman-Verstärkungsglasfaser das Signallicht Raman-verstärkt, wenn ihr Raman-Verstärkungspumplicht zugeführt wird; und
jeweilige Pumplicht-Versorgungseinrichtungen (30₁ bis 30_{M}), die bereitgestellt sind, um der Vielzahl von Raman-Verstärkungsglasfasern zu entsprechen, wobei jede der Pumplicht-Versorgungseinrichtungen Raman-Verstärkungspumplicht an die ihr entsprechende Raman-Verstärkungsglasfaser zuführt;
**dadurch gekennzeichnet, dass**
zwei Raman-Verstärkungsglasfasern, die aus der Vielzahl von Raman-Verstärkungsglasfasern ausgewählt sind, sich voneinander in zumindest einer der Wellenlängen, bei der ein Verstärkungsgrad von Raman-Verstärkung am größten wird, und der Anzahl von Kanälen unterscheiden, bei denen der Verstärkungsgrad von Raman-Verstärkung maximal ist, wobei ein durch ein Integrieren des absoluten Werts des Unterschieds zwischen jeweiligen Verstärkungsgradspektren von Raman-Verstärkung von den zwei ausgewählten Raman-Verstärkungsglasfasern bezüglich der Wellenlänge erhaltener Wert zumindest 7,5 dB·nm ist.

2. Optisches Kommunikationssystem nach Anspruch 1, bei dem sich jeweilige Pumplicht-Versorgungseinrichtungen, die den ausgewählten zwei Raman-Verstärkungsglasfasern entsprechen, voneinander in der Anzahl von darin enthaltenen Pumplichtquellen unterscheiden.

## Revendications

1. Système (1) de communication optique servant à transmettre un signal lumineux, qui comporte plusieurs canaux de signaux à l'intérieur d'une bande de longueur d'onde de signaux, d'un premier point (10) à un deuxième point (20), ledit système de communication optique comprenant :
une ligne de transmission optique, comportant plusieurs fibres optiques à amplification Raman (40₁ à 40_{M+1}), afin de transmettre ledit signal lumineux dudit premier point audit deuxième point, chacune desdites fibres optiques à amplification Raman appliquant une amplification Raman audit signal lumineux lorsqu'une lumière de pompage d'amplification Raman lui est fournie ; et
des moyens (30₁ à 30_{M}) de fourniture de lumière de pompage respectifs qui sont préparés de façon à correspondre aux fibres de ladite pluralité de fibres optiques à amplification Raman, chacun desdits moyens de fourniture de lumière de pompage fournissant une lumière de pompage d'amplification Raman à ladite fibre optique à amplification Raman qui lui correspond ;
**caractérisé en ce que** :
deux fibres optiques à amplification Raman qui sont sélectionnées dans ladite pluralité de fibres optiques à amplification Raman diffèrent l'une de l'autre en ce qui concerne au moins l'une des deux entités suivantes, à savoir les longueurs d'ondes auxquelles le gain d'amplification Raman devient le plus élevé, et le nombre de canaux pour lequel ledit gain d'amplification Raman est maximal, de sorte que la valeur obtenue par intégration de la valeur absolue de la différence entre des spectres de gain respectifs d'amplification Raman desdites deux fibres optiques à amplification Raman sélectionnées relativement à la longueur d'onde est d'au moins 7,5 dB.nm.

2. Système de communication optique selon la revendication 1, où des moyens de fourniture de lumière de pompage respectifs correspondant auxdites deux fibres optiques à amplification Raman diffèrent l'un de l'autre en ce qui concerne le nombre de sources de lumière de pompage qui y sont incluses.
